# EUROPÄISCHE PATENTSCHRIFT

(11) **EP 2 764 371 B1**
(45) Veröffentlichungstag und Bekanntmachung des Hinweises auf die Patenterteilung: **26.08.2015**
(21) Anmeldenummer: 11767420.0
(22) Anmeldetag: 04.10.2011
(51) Int. Cl.: G01N 35/00

(54) **ANALYSEGERÄT-WARTUNGSANORDNUNG**
MAINTENANCE ARRANGEMENT FOR AN ANALYSIS DEVICE
DISPOSITIF DE SURVEILLANCE D'UN APPAREIL D'ANALYSE

(43) Veröffentlichungstag der Anmeldung: 13.08.2014
(73) Patentinhaber: Hach Lange GmbH, 14163 Berlin (DE)
(72) Erfinder: THOMAS, Frank, 42657 Solingen (DE)
(74) Vertreter: Patentanwälte ter Smitten Eberlein Rütten Partnerschaftsgesellschaft
(86) Internationale Anmeldenummer: PCT/EP2011/067307
(87) Internationale Veröffentlichungsnummer: WO 2013/050063

(56) Entgegenhaltungen:
- EP-A1- 1 710 565
- EP-A2- 1 345 026
- DE-A1-102009 029 305
- US-A- 5 416 335
- US-B1- 6 825 485

## Beschreibung

Die Erfindung bezieht sich auf eine Analysegerät-Wartungsanordnung zur Wartung eines Umwelt-Analysegerätes.

Umwelt-Analysegeräte dienen der qualitativen und quantitativen Bestimmung bestimmter Analyten in einer Luft- oder Wasserprobe. Moderne Umwelt-Analysegeräte sind digital gesteuert und speichern für die Gerätewartung und für eine fehlerfreie und präzise Analyt-Bestimmung eine Vielzahl an Informationen, beispielsweise Daten über das Analysegerät selbst, den eingesetzten Sensor-Typ bzw. Sensor, Fehlermeldungen, Informationen über die eingesetzte Chemie, beispielsweise eine Chargennummer etc. Grundsätzlich werden jedoch nur wichtige Primär-Informationen in dem Analysegerät-Speicher gespeichert, nicht jedoch Sekundär-Informationen die nur selten benötigt werden, beispielsweise eine ausführliche Betriebsanleitung in einer Fremdsprache, Sicherheitsdatenblätter, allgemeine Reagenz-Qualitätsinformationen etc. Derartige Sekundär-Informationen sind gegebenenfalls nur auf einem Internet-Server des Analysegerät-Herstellers abrufbar. Ein Beispiel für ein Analysegerät ist die Sonde ANISE mit dem Steuerungsgerät SC 1000 der Hach Lange GmbH, Deutschland.

Gelegentlich sind moderne Umwelt-Analysegeräte an ein internes und/oder sogar externes digitales Netzwerk angeschlossen, so dass über die Netzwerk-Verbindung eine direkte Verbindung zu dem Analysegerät hergestellt werden kann, um die oben genannten Informationen auszulesen.

Die Gerätewartung erfolgt in der Regel mit Hilfe eines mobilen digitalen Servicegerätes, das zum Auslesen der Primär-Informationen über eine Datenverbindung mit dem Analysegerät verbunden werden muss. Hierzu muss das Analysegerät über eine entsprechende Hardware und Software verfügen, und muss zunächst eine entsprechende Verbindung zwischen dem Servicegerät und dem Analysegerät hergestellt werden.

Aufgabe der Erfindung ist es, die Handhabung einer Analysegerät-Wartungsanordnung zur Wartung eines Umwelt-Analysegerätes mit Hilfe eines Servicegerätes zu vereinfachen.

Diese Aufgabe wird erfindungsgemäß gelöst mit den Merkmalen des Patentanspruches 1.

Das stationäre Umwelt-Analysegerät weist ein manuelles Eingabemittel, einen Bildschirm und einen Barcode-Generator auf. Moderne Umwelt-Analysegeräte sind in der Regel bereits serienmäßig mit einem Bildschirm und mit einem manuellen Eingabemittel ausgestattet. Der Bildschirm muss so ausgestaltet sein, dass er einen Barcode mit ausreichender Auflösung anzeigen kann.

Unter einem manuellen Eingabemittel wird jeder Typ einer Mensch-Maschine-Schnittstelle verstanden, insbesondere Tasten und Tastaturen, wobei diese mechanisch und separat von dem Bildschirm ausgestaltet sein können, jedoch auch in Form entsprechender Tastenfelder auf einem als sogenannter Touchscreen ausgebildeten Bildschirm ausgebildet sein können.

Der Barcode-Generator erzeugt aus einer Eingangsinformation einen Barcode zur Anzeige auf dem Bildschirm, wobei der Barcode stets eine eindeutige virtuelle Zieladresse enthält, insbesondere eine Internet-Zieladresse.

Das mobile Servicegerät weist eine Digitalkamera, ein Barcode-Lesemodul und ein Funkmodul zur Herstellung einer Funk-Verbindung zu einer stationären Funkstation auf. Die Digitalkamera weist eine Auflösung auf, die es erlaubt, den von dem Bildschirm angezeigten Barcode mit ausreichender Auflösung zu fotografieren. Das Barcode-Lesemodul extrahiert aus dem durch die Digitalkamera von dem Bildschirm des Analysegerätes fotografierten Barcode die darin abgebildete virtuelle Zieladresse. Anschließend wird das Servicegerät über eine Datenverbindung mit einem die Zieladresse aufweisenden Zielgerät verbunden.

Das Funkmodul ist dazu geeignet, eine digitale Verbindung zu einer stationären externen Funkstation herzustellen, wobei dies beispielsweise über eine Mobiltelefon-Verbindung oder eine mobile Datenverbindung erfolgen kann, zum Beispiel EDGE, GRPS oder UMTS, oder aber auch über eine interne Funkverbindung über WLAN, Bluetooth oder andere Funknetze erfolgen kann.

Gemäß dem nebengeordneten Verfahrensanspruch ist zunächst ein manuelles betätigen des Eingabemittels vorgesehen, wodurch der Barcode-Generator einen Barcode generiert, der eine virtuelle Zieladresse enthält. Durch das Betätigen des Eingabemittels, beispielsweise einer Taste, wird von dem Servicetechniker eine bestimmte Information angefordert, beispielsweise eine Betriebsanleitung des Analysegerätes, Kalibrierdaten der eingesetzten Reagenzien und/oder Sensoren, Sicherheitsdatenblätter zu den eingesetzten Reagenzien, Basisdaten und Wartungsinformationen des Analysegerätes, Fehlerbilder oder Fehlerbehebungsinformationen etc.

In dem Analysegerät ist eine Liste mit den virtuellen Zieladressen gespeichert, unter denen die angebotenen Informationen direkt verfügbar sind. Bei den Zieladressen handelt es sich insbesondere um Internet-Adressen, unter denen der Hersteller des Analysegerätes bzw. der Reagenzien die betreffenden Informationen bereithält. Diese virtuelle Zieladresse wird von dem Barcode-Generator in Form eines Barcodes generiert, der auf dem Bildschirm angezeigt wird. An Stelle der Zieladresse kann selbstverständlich auch der die betreffende Zieladresse bereits enthaltene Barcode in der Liste gespeichert sein.

Der Servicetechniker fotografiert den Barcode auf dem Analysegerät-Bildschirm mit Hilfe der Digitalkamera seines mobilen Servicegerätes. Das Barcode-Lesemodul des Servicegerätes ermittelt aus dem fotografierten Barcode die virtuelle Zieladresse, die von dem Funkmodul des Servicegerätes zu der stationären Funkstation gesendet wird, die die unter der Zieladresse abgespeicherte Information an das Servicegerät zurücksendet, so dass diese Information auf einer Anzeige des Servicegerätes angezeigt werden kann.

Wenn das Analysegerät direkt an ein internes und/oder sogar externes digitales Netzwerk angeschlossen ist, verfügt das Analysegerät über eine eigene virtuelle Adresse, über die es direkt angesprochen werden kann. Der Servicetechniker kann in diesem Fall über das manuelle Eingabemittel des Analysegerätes eine direkte Verbindung zu dem Analysegerät anfordern, woraufhin der Barcode-Generator einen Barcode mit der virtuellen Analysegerät-Adresse als Zieladresse generiert und auf dem Analysegerät Bildschirm anzeigen lässt. Das mobile Servicegerät sendet die virtuelle Zieladresse, die der virtuellen Adresse des Analysegerätes entspricht, an die stationäre Funkstation, die dann eine Verbindung des Servicegerätes mit dem Analysegerät veranlasst. Auf diese Weise wird eine Datenverbindung zwischen dem Servicegerät und dem Analysegerät hergestellt, ohne dass das Analysegerät hierzu über spezielle Hardware und Software für eine direkte Verbindung zwischen dem Analysegerät an dem Servicegerät verfügen muss.

Vorzugsweise ist der Barcode ein zweidimensionaler Barcode, wobei der Bildschirm in beiden Achsen bevorzugt eine Auflösung von mehr als 127 Pixeln aufweist. Nur mit einem zweidimensionalen Barcode ist es möglich, längere Zieladressen darzustellen, wie dies beispielsweise auf eine Internet-Adresse eines Geräteherstellers generell zutrifft, unter der beispielsweise eine Gebrauchsanweisung für das Analysegerät hinterlegt ist. Der Bildschirm des Analysegerätes sollte eine gewisse Mindest-Auflösung aufweisen, um einen zweidimensionalen Barcode mit einem Raster von mindestens 50 x 50 Punkten lesen zu können.

Gemäß einer bevorzugten Ausgestaltung ist das Analysegerät ein stationäres Analysegerät, wobei das Analysegerät ein Labor-Analysegerät zur Durchführung von Einzelmessungen oder aber ein Prozess-Analysegerät zur quasikontinuierlichen Messung für die Überwachung eines Prozesses sein kann. Besonders bevorzugt ist das Analysegerät ein Wasser-Analysegerät, das zur Bestimmung eines Analyts in Wasser, i beispielsweise in Trinkwasser, Brauchwasser oder Abwasser eingesetzt wird.

Im Folgenden wird unter Bezugnahme auf die Zeichnungen ein Ausführungsbeispiel der Erfindung näher erläutert.

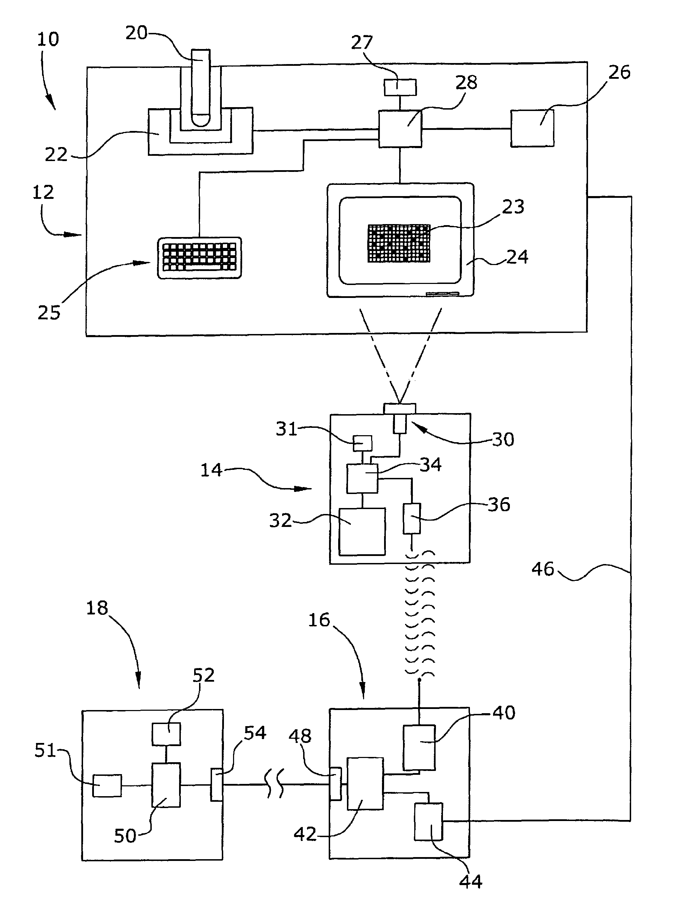

Die Figur zeigt eine Analysegerät-Wartungsanordnung 10, die im Wesentlichen aus einem stationären Umwelt-Analysegerät 12, einem mobilen Servicegerät 14, einer Funkstation 16 und einem Internet-Server 18 besteht.

Das Umwelt-Analysegerät 12 ist vorliegend ein stationäres Labor-Analysegerät zur Analyse eines Analyts in einer Wasserprobe, die in eine ein Reagenz enthaltende Küvette 20 pipettiert wurde. Die Küvette 20 steht in einem Küvettenschacht, dem ein Fotometer 22 zugeordnet ist, das die Küvette radial fotometriert. Das Analysegerät 12 weist ein Eingabemittel 25 in Form einer kleinen Tastatur, einen LCD-Bildschirm 24, einen Datenspeicher 26 und einen Barcode-Generator 27 auf. Alle vorgenannten Aggregate des Analysegerätes 12 werden durch eine zentrale Steuerung 28 gesteuert und geregelt. Der Bildschirm 24 hat eine Auflösung von mindestens 128 x 128 Punkten.

In dem Datenspeicher 26 sind Geräteinformationen, beispielsweise die Seriennummer des Analysegerätes 12, Sensorinformationen über den verbauten Sensor 22, also vorliegend über das Fotometer 22, eine Chargennummer der Küvette 20 bzw. des Reagenzes in der Küvette 20, Geräte-Fehlermeldungen, Wartungsinformationen etc gespeichert. Die in dem Datenspeicher 26 gespeicherten Informationen können durch den Barcode-Generator 27 zusammen mit dem durch den Servicetechniker über das Eingabemittel 25 eingegebenen Informationswunsch in einen Barcode umgesetzt werden, der eine virtuelle Zieladresse enthält. Die virtuelle Zieladresse ist vorliegend eine Internet-Zieladresse, unter der der eingegebene Informationswunsch für das betreffende Analysegerät 12, der betreffenden Sensor 22, das betreffende Reagenz und/oder die betreffende Reagenz-Charge direkt abrufbar ist.

Das mobile Servicegerät 14 weist eine Digitalkamera 30, ein Barcode-Lesemodul 31, ein Funkmodul 36, ein eine als Bildschirm ausgebildete Anzeige 32 und eine Steuerung 34 auf. Die Digitalkamera 30 hat eine Auflösung, die mindestens doppelt so groß sein sollte, wie die Auflösung des Bildschirms 24. Das Barcode-Lesemodul 31 dient dazu, aus dem durch die Digitalkamera 30 angefertigten Foto des auf dem Analysegerät-Bildschirm 24 abgebildeten Barcodes 23 die darin gespeicherte Information zu ermitteln, und insbesondere eine in dem Barcode 23 gespeicherte Internet-Zieladresse zu ermitteln. Das Barcode-Lesemodul 31 ist nicht notwendigerweise ein separates Hardware-Modul, sondern kann auch ausschließlich in der in dem Datenspeicher 32 gespeicherten Software verwirklicht sein.

Das Funkmodul 36 ist vorliegend ein Mobiltelefon-Funkmodul, das eine drahtlose Daten-Verbindung zu einer entsprechenden stationären Funkstation 16 herstellen kann. Als Standard kommen hierfür derzeit beispielsweise GSM-, HSCSD-, GPRS-, EDGE- oder UMTS - Mobiltelefonnetze in Frage.

Alternativ oder ergänzend kann das Funkmodul 36 auch als WLAN-Modul ausgebildet sein, wodurch das Servicegerät auch eine Datenverbindung mit einem lokalen drahtlosen Netzwerk herstellen kann. Dies macht jedoch nur dann Sinn, wenn das Analysegerät 12 über eine Netzwerk-Datenleitung 46 mit der WLAN- Funkstation 16 verbunden ist.

Die stationäre Funkstation 16 weist ein Funkmodul 40, eine Analysegerät-Schnittstelle 44, eine Internet-Schnittstelle 48 und eine zentrale Steuerung 42 auf. Über die Analysegerät-Schnittstelle 44 ist die stationäre Funkstation 16 über eine Netzwerk-Datenleitung 46, beispielsweise eine Ethernet-Verbindungsleitung, direkt mit dem Analysegerät 12 verbunden.

Über die Internet-Schnittstelle 48 ist die Funkstation 16 mit einem Internet-Server 18 verbunden.

Der Internet-Server 18 steht beispielsweise bei dem Hersteller des Analysegerätes 12. Der Internet-Server 18 weist eine Schnittstelle 54, 5 eine Steuerung 50, einen ersten Datenspeicher 51 und einen zweiten Datenspeicher 52 auf. In dem ersten Datenspeicher 51 sind unter seiner Seriennummer Informationen zu dem Analysegerät 12 gespeichert, beispielsweise Bedienungsanleitungen, technische und historische Daten des Analysegerätes etc. In dem zweiten Datenspeicher 52 sind chargenspezifische Informationen zu dem Reagenz der Küvette 20 gespeichert, beispielsweise Kalibrierdaten, Verfällsdaten, Gefahreninformationen etc. Jede der genannten Informationen ist jeweils unter einer eindeutigen Zieladresse abgespeichert, so dass unter dieser Zieladresse die dort gespeicherte Information sofort abgerufen werden können.

Wenn der Servicetechniker eine bestimmte Information wünscht, gibt er seinen Informationswunsch, also die Art der gewünschten Information, zunächst über die Tastatur 25 in das Analysegerät 12 ein. Die Steuerung 28 bezieht die für den konkreten Informationswunsch benötigten Geräte-und/oder Reagenz-Informationen aus dem Datenspeicher 26, sendet diese anschließend an den Barcode-Generator 27, der hieraus eine eindeutige Internet-Adresse generiert und in einem zweidimensionalen Barcode umwandelt. Dieser Barcode wird durch die Steuerung zu dem Bildschirm 24 gesendet, so dass der die Internet-Zieladresse enthaltende Barcode 23 auf dem Bildschirm 24 angezeigt wird.

Der Servicetechniker fotografiert den Barcode 23 mit der Digitalkamera 30 seines Servicegerätes 14 von dem Bildschirm 24 ab. Die Servicegerät-Steuerung 34 schickt das Foto mit dem fotografierten Barcode an das Barcode-Lesemodul 31, das aus dem Barcode die Internet-Adresse extrahiert. Die Steuerung 34 veranlasst das Funkmodul 36, eine Datenverbindung mit einer stationären Funkstation 16 herzustellen.

Sobald die Datenverbindung hergestellt ist, sendet das Funkmodul 36 die Internet-Adresse an die Funkstation 16, die eine Verbindung zu der betreffenden Internet-Adresse auf dem Internet-Server 18 erstellt und die unter dieser Internet-Adresse auf dem Server 18 gespeicherte Information 5 zurück zu dem Servicegerät 14 schickt, wo diese Information auf der Anzeige 32 angezeigt wird.

## Patentansprüche

1. Analysegerät-Wartungsanordnung (10) zur Wartung eines Umwelt-Analysegerätes (12), mit
dem stationären Umwelt-Analysegerät (12), das ein manuelles Eingabemittel (25), einen Bildschirm (24) und einen Barcode-Generator (27) aufweist, der aus einer Eingangsinformation einen Barcode (23) zur Anzeige auf dem Bildschirm (24) erzeugt, wobei der Barcode (23) eine virtuelle Zieladresse enthält, und
einem mobilen Servicegerät (14), das eine Digitalkamera (30), ein Barcode-Lesemodul (31) und ein Funkmodul (36) zur Herstellung einer Funk-Verbindung zu einer stationären Funkstation (16) aufweist,
wobei das Barcode-Lesemodul (31) aus dem durch die Digitalkamera von dem Bildschirm gelesenen Barcode (23) die virtuelle Zieladresse extrahiert, die Zieladresse durch das Funkmodul (36) zu der Funkstation (16) gesendet wird, die das Servicegerät (14) mit einem die Zieladresse aufweisenden Zielgerät (12,18) verbindet.

2. Analysegerät-Wartungsanordnung (10) nach Anspruch 1, wobei der Barcode (23) ein zweidimensionaler Barcode ist, und der Bildschirm (24) in beiden Achsen bevorzugt eine Auflösung von mehr als 127 Pixeln aufweist.

3. Analysegerät-Wartungsanordnung (10) nach einem der vorangegangenen Ansprüche, wobei das Analysegerät (12) ein stationäres Analysegerät ist.

4. Analysegerät-Wartungsanordnung (10) nach einem der vorangegangenen Ansprüche, wobei das Analysegerät (12) ein Wasser-Analysegerät ist.

5. Verfahren zur Wartung eines Umwelt-Analysegerätes (12) einer Analysegerät-Wartungsanordnung (10), die aufweist:
das stationäre Umwelt-Analysegerät (12), das ein manuelles Eingabemittel (25), einen Bildschirm (24) und einen Barcode-Generator (27) aufweist, der aus einer Eingangsinformation einen Barcode (23) zur Anzeige auf dem Bildschirm (24) erzeugt, wobei der Barcode (23) eine virtuelle Zieladresse enthält, und
ein mobiles Servicegerät (14), das eine Digitalkamera (30), ein Barcode-Lesemodul (31) und ein Funkmodul (36) zur Herstellung einer Funk-Verbindung zu einer stationären Funkstation (16) aufweist,
mit den Verfahrensschritten:
Manuelles Betätigen des Eingabemittels (25), wodurch der Barcode-Generator einen Barcode (23) generiert, der eine virtuelle Zieladresse enthält,
Anzeigen des Barcodes (23) auf dem Bildschirm (24),
Fotografieren des den Barcode (23) anzeigenden Bildschirms (24) mit der Servicegerät-Kamera (30),
Extrahieren der virtuellen Zieladresse aus dem fotografierten Barcode (23) durch das Barcode-Lesemodul (31),
Senden der virtuellen Zieladresse durch das Funkmodul (36) zu der Funkstation (16), und
Verbinden des Servicegerätes (14) mit einem die Zieladresse aufweisenden Zielgerät (12,18) durch die Funkstation (16).

## Claims

1. A maintenance arrangement (10) for an analysis device for maintaining an environment analysis device (12), comprising:
the stationary environment analysis device (12) comprising a manual input (25), a monitor (24), and a barcode generator (27) configured to generate a barcode (23) from an input information item for display on the monitor (24), the barcode (23) comprising a virtual target address; and
a mobile service device (14) comprising a digital camera (30), a barcode reading module (31), and a radio module (36) configured to establish a radio link to a stationary radio station (16),
wherein the barcode reading module (31) extracts the virtual target address from the barcode (23) read from the monitor by the digital camera, the target address is sent to the radio station (16) by the radio module (36), the radio station linking the service device (14) to a target device (12, 18) having the target address.

2. The maintenance arrangement (10) for an analysis device as recited in claim 1, wherein the barcode (23) is a two-dimensional barcode and the monitor (24) has a resolution higher than 127 pixels along both of its axes.

3. The maintenance arrangement (10) for an analysis device as recited in one of the preceding claims, wherein the analysis device (12) is a stationary analysis device.

4. The maintenance arrangement (10) for an analysis device as recited in one of the preceding claims, wherein the analysis device (12) is a water analysis device.

5. A method for maintaining an environment analysis device (12) of a maintenance arrangement (10) for an analysis device, comprising:
the stationary environment analysis device (12) comprising a manual input (25), a monitor (24), and a barcode generator (27) configured to generate a barcode (23) from an input information item for display on the monitor (24), the barcode (23) comprising a virtual target address; and
a mobile service device (14) comprising a digital camera (30), a barcode reading module (31), and a radio module (36) configured to establish a radio link to a stationary radio station (16),
the method comprising:
manually operating the input device (25), whereby the barcode generator generates a barcode (23) including a virtual target address,
displaying the barcode (23) on the monitor (24),
taking a picture of the monitor (24) displaying the barcode (23) with the service device camera (30),
extracting the virtual target address from the captured barcode (23) with the barcode reading module (31),
sending the virtual target address to the radio station (16) via the radio module (36), and
linking the service device (14) to a target device (12, 18) having a target address via the radio station (16).

## Revendications

1. Dispositif de maintenance (10) d'un appareil d'analyse pour la maintenance d'un appareil d'analyse environnementale (12), comprenant
l'appareil d'analyse environnementale (12) stationnaire comprenant un moyen de saisie manuelle (25), un moniteur (24) et un générateur de codes à barres (27) qui génère un code à barres (23) à partir d'une information d'entrée pour l'afficher sur ledit moniteur (24), ledit code à barres (23) comportant une adresse de destination virtuelle, et
un appareil de service (14) mobil avec un appareil photographique numérique (30), un module lecteur de codes à barres (31) et un module radio (36) pour établir une liaison radio avec une station radio (16) stationnaire,
ledit module lecteur de codes à barres (31) extrayant l'adresse de destination virtuelle à partir du code à barres (23) lu sur le moniteur par ledit appareil photographique numérique (30), ladite adresse de destination étant transmise par le module radio (36) à la station radio (16) qui établit une liaison entre l'appareil de service (14) et un appareil de destination (12, 18) portant l'adresse de destination.

2. Dispositif de maintenance (10) d'un appareil d'analyse selon la reverldication 1, dans lequel ledit code à barres (23) est un code à barres bidimensionnel et ledit moniteur (24) a, de préférence, une résolution supérieure à 127 pixels selon ses deux axes.

3. Dispositif de maintenance (10) d'un appareil d'analyse selon l'une quelconque des revendications précédentes, dans lequel l'appareil d'analyse (12) est un appareil d'analyse stationnaire.

4. Dispositif de maintenance (10) d'un appareil d'analyse selon l'une quelconque des revendications précédentes, dans lequel l'appareil d'analyse (12) est un appareil d'analyse de l'eau.

5. Procédé pour la maintenance d'un appareil d'analyse environnementale (12) d'un dispositif de maintenance (10) d'un appareil d'analyse comportant:
l'appareil d'analyse environnementale (12) stationnaire comprenant un moyen de saisie manuelle (25), un moniteur (24) et un générateur de codes à barres (27) qui génère un code à barres (23) à partir d'une information d'entrée pour l'afficher sur ledit moniteur (24), ledit code à barres (23) comportant une adresse de destination virtuelle, et
un appareil de service (14) mobil avec un appareil photographique numérique (30), un module lecteur de codes à barres (31) et un module radio (36) pour établir une liaison radio avec une station radio (16) stationnaire,
le procédé comprenant les étapes suivantes:
opération manuel du moyen de saisie (25), le générateur de codes à barres ensuite générant un code à barres (23) comportant une adresse de destination virtuelle,
affichage du code à barres (23) sur le moniteur (24),
photographier le moniteur (24) affichait le code à barres (23) utilisant ledit appareil photographique (30) de l'appareil de service,
extraire, par le module de lecture de codes à barres (31), l'adresse de destination virtuelle à partir du code à barres (23) photographié,
transmission de l'adresse de destination virtuelle par le module radio (36) à la station radio (16) et
établir, par la station radio (16), une liaison de l'appareil de service (14) avec un appareil de destination (12, 18) ayant l'adresse de destination.
